# EUROPÄISCHE PATENTANMELDUNG

(11) **EP 3 100 888 A1**
(43) Veröffentlichungstag der Anmeldung: **07.12.2016**
(21) Anmeldenummer: 15170391.5
(22) Anmeldetag: 03.06.2015
(51) Int. Cl.: B60K 6/48, B60K 6/365, B60K 6/547, F16H 3/72, F16H 3/44

(54) **GETRIEBE FÜR EIN KRAFTFAHRZEUG, SOWIE ANTRIEBSTRANG FÜR EIN HYBRIDFAHRZEUG MIT EINEM SOLCHEN GETRIEBE**

(71) Anmelder: ZF Friedrichshafen AG, 88046 Friedrichshafen (DE)
(72) Erfinder: Ziemer, Peter, 88069 Tettnang (DE); Brehmer, Martin, 88069 Tettnang (DE); Beck, Stefan, 88097 Eriskirch (DE); Horn, Matthias, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88131 Lindau (DE); Griesmeier, Uwe, 88677 Markdorf (DE); Kuberczyk, Raffael, 88212 Ravensburg (DE)

(57) **Zusammenfassung**

Getriebe (1) für ein Kraftfahrzeug, wobei das Getriebe (1) eine Antriebswelle (3), eine Abtriebswelle (4), eine elektrische Maschine (2) mit einem drehfesten Stator (9) und einem drehbaren Rotor (11), drei Planetenradsätze (P1, P2, P3), sowie fünf Schaltelemente (A, B, C, D, E) aufweist, wobei die drei Planetenradsätze (P1, P2, P3) zusammen fünf in der Reihenfolge ihrer Drehzahlordnung als erste, zweite, dritte, vierte und fünfte Welle bezeichnete Wellen (W1, W2, W3, W4, W5) aufweisen, wobei die Antriebswelle (3) über das erste Schaltelement (A) mit der fünften Welle (W5) und über das fünfte Schaltelement (E) mit der dritten Welle (W3) verbindbar ist, wobei die Abtriebswelle (4) mit der vierten Welle (W4) ständig verbunden ist, wobei durch Schließen des zweiten Schaltelements (B) die erste Welle (W1), durch Schließen des dritten Schaltelements (C) die zweite Welle (W2) und durch Schließen des vierten Schaltelements (D) die dritte Welle (W3) drehfest festsetzbar ist und wobei der Rotor (11) mit der ersten Welle (W1) ständig verbunden ist.

## Beschreibung

Die Erfindung betrifft ein Getriebe für ein Kraftfahrzeug, und einen Antriebsstrang für ein Hybridfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen zwei Wellen des Getriebes, durch Schaltelemente vorzugsweise automatisch schaltbar sind. Bei den Schaltelementen handelt es sich beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Aus der nicht veröffentlichten DE 10 2013 225 205 und der ebenfalls nicht veröffentlichten DE 10 2013 225 202 der Anmelderin ist jeweils ein als Vierganggetriebe für Hybridanwendungen ausgebildetes Getriebe bekannt, die jeweils ein sogenanntes reduziertes Drei-Steg-Fünf-Wellen-Getriebe darstellen.

Der vorliegenden Erfindung liegt die Aufgabe zugrunde, ein Getriebe mit sechs Übersetzungen bereitzustellen, welches sich gegenüber den im Stand der Technik bekannten Getrieben durch einen lediglich geringfügig erhöhten Bauaufwand auszeichnet.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, eine elektrische Maschine mit einem drehfesten Stator und einem drehbaren Rotor, drei Planetenradsätze sowie fünf Schaltelemente auf. Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Die drei Planetenradsätze weisen zusammen fünf in der Reihenfolge ihrer Drehzahlordnung als erste, zweite, dritte, vierte und fünfte Welle bezeichnete Wellen auf. Diese fünf Wellen sind dadurch gekennzeichnet, dass die Drehzahlen dieser Wellen in der genannten Reihenfolge linear ansteigen, abnehmen oder gleich sind. In anderen Worten ist die Drehzahl der ersten Welle kleiner gleich der Drehzahl der zweiten Welle. Die Drehzahl der zweiten Welle ist wiederum kleiner gleich der Drehzahl der dritten Welle. Die Drehzahl der dritten Welle ist kleiner gleich der Drehzahl der vierten Welle. Die Drehzahl der vierten Welle ist kleiner gleich der Drehzahl der fünften Welle. Diese Reihenfolge ist auch reversibel, sodass die fünfte Welle die kleinste Drehzahl aufweist, während die erste Welle eine Drehzahl annimmt die größer oder gleich groß wie die Drehzahl der fünfte Welle ist. Zwischen den Drehzahlen aller fünf Wellen besteht dabei stets ein linearer Zusammenhang. Die Drehzahl einer oder mehrerer der fünf Wellen kann dabei auch negative Werte, oder auch den Wert Null annehmen. Die Drehzahlordnung ist daher stets auf den vorzeichenbehafteten Wert der Drehzahlen zu beziehen, und nicht auf deren Betrag.

Die drei Planetenradsätze bilden somit ein sogenanntes "Drei-Steg-Fünf-Wellen-Getriebe", welches aus drei über genau vier Koppelstellen kinematisch miteinander gekoppelten Einzel-Planetenradsätzen gebildet ist und bei dem fünf seiner Elemente ("Wellen") für andere Getriebeelemente frei zugänglich sind. Jeweils eine Koppelwelle ist dabei als ständige mechanische Verbindung zwischen einem Element - also Sonnenrad oder Steg oder Hohlrad - eines Einzel-Planetenradsatzes mit einem Element - also Sonnenrad oder Steg oder Hohlrad - eines weiteren Einzel-Planetenradsatzes definiert.

Durch Schließen des ersten Schaltelements ist die Antriebswelle mit der fünften Welle verbindbar. Durch Schließen des zweiten Schaltelements ist die erste Welle drehfest festsetzbar, indem sie mit einem Gehäuse oder mit einem anderen drehfesten Bauelement des Getriebes über das zweite Schaltelement schaltbar verbunden ist. Durch Schließen des dritten Schaltelements ist die zweite Welle in gleicher Weise drehfest festsetzbar. Durch Schließen des vierten Schaltelements ist die dritte Welle in gleicher Weise drehfest festsetzbar. Durch Schließen des fünften Schaltelements ist die Antriebswelle mit der dritten Welle verbindbar. Die vierte Welle ist mit der Abtriebswelle ständig verbunden. Der Rotor der elektrischen Maschine ist mit der ersten Welle ständig verbunden.

Durch die Möglichkeit, die erste Welle durch das zweite Schaltelement drehfest festzusetzen, ist im Vergleich zu den im Stand der Technik bekannten Getrieben die Ausbildung zweier zusätzlicher Vorwärtsgänge zwischen Antriebswelle und Abtriebswelle möglich.

Durch selektives paarweises Schließen der fünf Schaltelemente sind sechs Vorwärtsgänge zwischen der Antriebswelle und der Abtriebswelle darstellbar. Der erste Vorwärtsgang wird durch Schließen des ersten Schaltelements und des vierten Schaltelements gebildet. Der zweite Vorwärtsgang wird durch Schließen des ersten Schaltelements und des dritten Schaltelements gebildet. Der dritte Vorwärtsgang wird durch Schließen des ersten Schaltelements und des zweiten Schaltelements gebildet. Der vierte Vorwärtsgang wird durch Schließen des ersten Schaltelements und des fünften Schaltelements gebildet. Der fünfte Vorwärtsgang wird durch Schließen des zweiten und des fünften Schaltelements gebildet. Der sechste Vorwärtsgang wird durch Schließen des dritten und des fünften Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets ein Schaltelement auf, das in beiden diesen Gängen geschlossen ist. Dies vereinfacht den Schaltvorgang und verkürzt die Schaltdauer zwischen benachbarten Vorwärtsgängen.

Vorzugsweise ist die Antriebswelle über ein sechstes Schaltelement mit der ersten oder mit der zweiten Welle verbindbar. Das sechste Schaltelement ermöglicht die Bildung eines mechanischen Rückwärtsganges zwischen der Antriebswelle und der Abtriebswelle, nämlich durch Schließen des vierten Schaltelements und des sechsten Schaltelements. Bei Verwendung des Getriebes im Antriebsstrang eines Kraftfahrzeugs ist daher auch dann ein Rückwärtsgang darstellbar, wenn die Funktionalität der elektrischen Maschine nicht gegeben ist, beispielsweise aufgrund eines leeren Energiespeichers. Dadurch wird die Betriebsbereitschaft des Getriebes verbessert.

Zudem ist ein rein elektrischer Antrieb der Abtriebswelle durch die elektrische Maschine möglich. Dazu ist entweder das dritte Schaltelement oder das vierte Schaltelement zu schließen. Je nach Drehrichtung des Rotors ergibt sich eine unterschiedliche Drehrichtung der Abtriebswelle. Ein elektrischer Antrieb mittels der elektrischen Maschine ermöglicht daher sowohl eine Vorwärtsfahrt als auch eine Rückwärtsfahrt des Kraftfahrzeugs. Dabei wird die Antriebswelle durch die elektrische Maschine nicht angetrieben.

Ist von den fünf Schaltelementen nur das erste oder das fünfte Schaltelement geschlossen, so ist ein Überlagerungsbetriebsmodus darstellbar. Durch Schließen des ersten Schaltelements ist die Antriebswelle mit der fünften Welle verbunden. Durch Offenhalten der übrigen an der Gangbildung beteiligten Schaltelemente ergibt sich ohne weiteres keine feste Drehzahlbeziehung zwischen den fünf Wellen. Erst durch Aufbringen eines Abstützmoments durch die elektrische Maschine an der ersten Welle ergibt sich eine feste Drehzahlbeziehung zwischen den fünf Wellen der drei Planetenradsätze. Dadurch kann die Abtriebsdrehzahl bei vorgegebener Drehzahl der Antriebswelle und Variation der Rotordrehzahl stufenlos verändert werden. Somit kann ein stufenloser Betrieb des Getriebes bereitgestellt werden, beispielsweise zum Anfahren des Kraftfahrzeugs.

Durch Schließen des ersten Schaltelements und drehfester Festsetzung der Abtriebswelle, beispielsweise mittels einer Parksperre, wird eine Wirkverbindung zwischen der Antriebswelle und der elektrischen Maschine hergestellt, ohne auf die Abtriebswelle eine Drehzahl aufzubringen. Dadurch wird ein Standladebetriebsmodus bereitgestellt, bei dem eine mit der Antriebswelle verbundene Antriebseinheit einen Energiespeicher durch generatorischen Betrieb der elektrischen Maschine im Stillstand des Kraftfahrzeugs aufladen kann.

Gemäß einer ersten Ausführungsform ist der erste Planetenradsatz radial innerhalb des zweiten Planetenradsatzes in einer gemeinsamen Radsatzebene angeordnet. Dadurch kann die axiale Baulänge des Getriebes reduziert werden.

Vorzugsweise ist die erste Welle mit einem Sonnenrad des dritten Planetenradsatzes verbunden. Die zweite Welle ist mit einem Sonnenrad des zweiten Planetenradsatzes und mit einem Hohlrad des ersten Planetenradsatzes verbunden. Die dritte Welle ist mit einem Steg des ersten Planetenradsatzes und mit einem Steg des zweiten Planetenradsatzes verbunden. Die vierte Welle ist mit einem Hohlrad des zweiten Planetenradsatzes verbunden. Die fünfte Welle ist mit einem Sonnenrad des ersten Planetenradsatzes verbunden. Durch diese Zuordnung der Planetenradsatz-Elemente, also Sonnenrad, Steg und Hohlrad, und den fünf Wellen ergibt sich eine kompakte Anordnung und eine gute Zugänglichkeit zu deren äußeren Schnittstellen, also zu den Schaltelementen und im Falle der vierten Welle zur Abtriebswelle.

Vorzugsweise ist die zweite Welle mit einem Steg des dritten Planetenradsatzes verbunden. Ein Hohlrad des dritten Planetenradsatzes ist dabei wahlweise mit der dritten Welle oder mit der fünften Welle verbunden. Je nach Zuordnung des Hohlrads des dritten Planetenradsatzes zur in Drehzahlordnung dritten oder fünften Welle ergibt sich eine andere Übersetzung der ersten Welle zur zweiten Welle. Beide Varianten sind durch eine gute Zugänglichkeit gekennzeichnet.

Gemäß einer zweiten Ausführungsform ist die erste Welle mit einem Sonnenrad des dritten Planetenradsatzes verbunden. Die zweite Welle ist mit einem Hohlrad des ersten Planetenradsatzes verbunden. Die dritte Welle ist mit einem Steg verbunden, welcher als gemeinsamer Steg des ersten, zweiten und dritten Planetenradsatzes ausgebildet ist. Die vierte Welle ist mit einem Hohlrad verbunden, welches als gemeinsames Hohlrad des zweiten und dritten Planetenradsatzes ausgebildet ist. Die fünfte Welle ist mit einem Sonnenrad verbunden, welches als gemeinsames Sonnenrad des ersten und zweiten Planetenradsatzes ausgebildet ist. Die drei Planetenradsätze sind im Getriebe gemäß der zweiten Ausführungsform somit teilweise ineinander integriert. Erster und dritter Planetenradsatz wirken dabei als Minus-Radsätze. Der zweite Planetenradsatz wirkt als Plus-Radsatz. Dadurch ergibt sich ein besonders kompakter Aufbau der drei Planetenradsätze, wodurch die axiale Baulänge des Getriebes reduziert werden kann.

Prinzipiell kann jedes der fünf Schaltelemente als kraftschlüssiges Schaltelement mit variabler Drehmomentübertragungsfähigkeit oder als formschlüssiges Schaltelement ausgebildet sein.

Vorzugsweise ist das vierte Schaltelement als kraftschlüssiges Schaltelement mit variabler Drehmomentübertragungsfähigkeit ausgebildet, beispielsweise als Lamellenbremse. Da das vierte Schaltelement an der Bildung des ersten Vorwärtsganges und gegebenenfalls des Rückwärtsganges beteiligt ist, kann das vierte Schaltelement in beiden diesen Gängen als Anfahrelement dienen, indem es im Schlupf betrieben wird. Das erste, zweite und gegebenenfalls das sechste Schaltelement sind dabei vorzugsweise als formschlüssige Schaltelemente ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Dadurch kann der mechanische Wirkungsgrad des Getriebes verbessert werden. Vorzugsweise ist das dritte Schaltelement als kraftschlüssiges Schaltelement mit variabler Drehmomentübertragungsfähigkeit ausgebildet. Dadurch wird während des rein elektrischen Antriebs der Abtriebswelle mittels der elektrischen Maschine ein Lastschaltvorgang ermöglicht, bei dem das vierte Schaltelement geöffnet und das dritte Schaltelement geschlossen wird.

Alternativ dazu kann das erste Schaltelement als kraftschlüssiges Schaltelement mit variabler Drehmomentübertragungsfähigkeit ausgebildet sein, wobei das zweite und vierte Schaltelement vorzugsweise als formschlüssige Schaltelemente ausgebildet sind. Da das erste Schaltelement an der Bildung des ersten Vorwärtsganges beteiligt ist, kann das erste Schaltelement in diesem Gang als Anfahrelement dienen, indem es im Schlupf betrieben wird. Da das erste Schaltelement im ersten bis vierten Vorwärtsgang geschlossen ist, wirkt sich die Ausbildung als kraftschlüssiges Schaltelement in diesen vier Gängen nicht auf den Wirkungsgrad des Getriebes aus. Soll auch im Rückwärtsgang in ähnlicher Weise angefahren werden, so ist das sechste Schaltelement ebenso als kraftschlüssiges Schaltelement auszubilden.

Gemäß einer weiteren möglichen Ausgestaltung sind das zweite und dritte Schaltelement, das vierte und fünfte Schaltelement, und/oder erste und sechste Schaltelement als formschlüssige Schaltelemente ausgebildet, welche durch je einen doppeltwirkenden Betätigungsmechanismus schaltbar sind. Beide Schaltelemente dieser Schaltelement-Gruppen können daher durch einzigen Aktuator betätigt werden. Dies reduziert die mechanische Komplexität des Getriebes.

Ist die Antriebswelle mit einem Rotor einer weiteren elektrischen Maschine gekoppelt, ist eine mit der Antriebswelle in Wirkverbindung bringbare Verbrennungskraftmaschine einerseits über die weitere elektrische Maschine beispielsweise über einen Schleppstart in einen zugeschalteten Betriebszustand überführbar oder bei entsprechend zugeschalteter Verbrennungskraftmaschine in Verbindung mit der weiteren motorisch betriebenen elektrischen Maschine ein sogenannter Boost-Betriebszustand darstellbar oder im generatorischen Betrieb der weiteren elektrischen Maschine im Bereich der elektrischen Maschine elektrische Energie erzeugbar, mit der beispielsweise ein Bordnetz eines Kraftfahrzeuges versorgbar ist oder für einen motorischen Betrieb der elektrischen Maschine zur Verfügung stellbar ist.

Das Getriebe kann Bestandteil eines Antriebsstrangs eines Hybridfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden oder über eine Trennkupplung verbindbar ist. Die Abtriebswelle des Getriebes ist mit einem Achsgetriebe antriebswirkverbunden, welcher mit Rädern des Hybridfahrzeugs verbunden ist. Der Antriebsstrang ermöglicht mehrere Antriebsmodi des Hybridfahrzeugs. In einem elektrischen Fahrbetrieb wird das Hybridfahrzeug von der elektrischen Maschine des Getriebes angetrieben. In einem verbrennungsmotorischen Betrieb wird das Hybridfahrzeug von der Verbrennungskraftmaschine angetrieben. In einem hybridischen Betrieb wird das Hybridfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Ausführungsbeispiele der Erfindung sind nachfolgend anhand der beigefügten Figuren detailliert beschrieben.

Es zeigt:
Fig. 1 ein Räderschema eines ersten Ausführungsbeispiels des erfindungsgemäßen Getriebes;
Fig. 2 eine Fig. 1 entsprechende Darstellung eines zweiten Ausführungsbeispiels des erfindungsgemäßen Getriebes;
Fig. 3 ein Schaltschema des Getriebes gemäß Fig. 1 bzw. gemäß Fig. 2;
Fig. 4 eine Fig. 1 entsprechende Darstellung einer dritten Ausführungsform des erfindungsgemäßen Getriebes in Front-Quer-Bauweise;
Fig. 5 eine Fig. 4 entsprechende Darstellung einer vierten Ausführungsform des erfindungsgemäßen Getriebes in Längsanordnung;
Fig. 6 ein Schaltschema des Getriebes gemäß Fig. 4 bzw. gemäß Fig. 5; und
Fig. 7 einen Drehzahlplan des Getriebes gemäß Fig. 1, Fig. 2, Fig. 4 und Fig. 5.
Fig. 8 zeigt schematisch einen Antriebsstrang eines Hybridfahrzeugs.

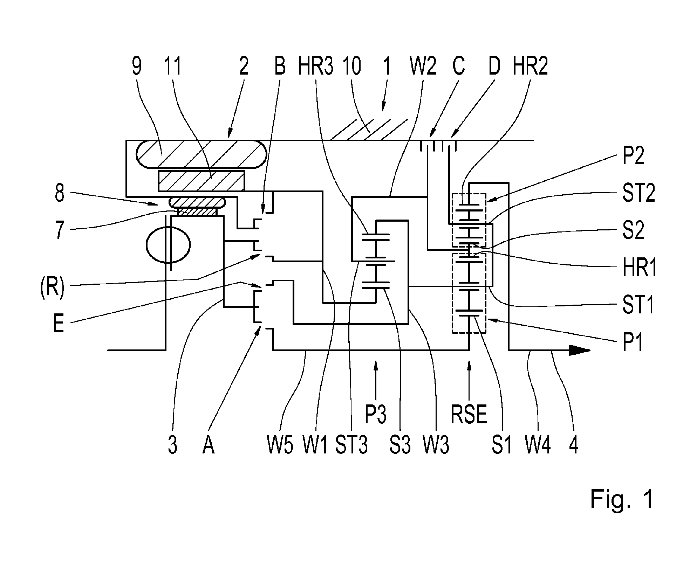

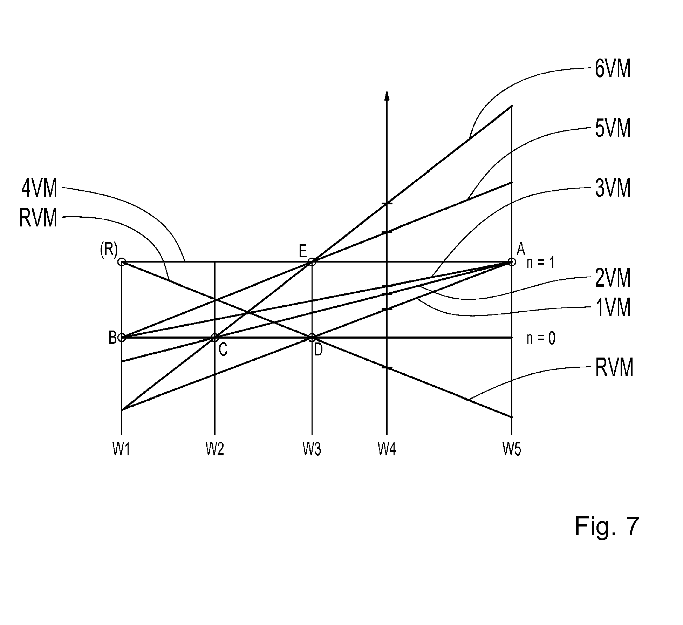

In Fig. 1 ist eine erste Ausführungsform eines Getriebes 1 mit einer elektrischen Maschine 2, mit einer Antriebswelle 3, mit einer Abtriebswelle 4 und mit drei Planetenradsätzen P1 bis P3 dargestellt, die als sogenanntes Drei-Steg-Fünf-Wellen-Getriebe ausgeführt sind. Die drei Planetenradsätze P1 bis P3 umfassen daher fünf Wellen W1 bis W5. Des Weiteren sind die Planetenradsätze P1 bis P3 jeweils als Minusplanetenradsätze ausgebildet. Zur Darstellung von wenigstens sechs Übersetzungen, während welchen die Antriebswelle 3 und die Abtriebswelle 4 beispielsweise mit der gleichen Drehrichtung rotieren die prinzipiell Übersetzungen für Vorwärtsfahrt 1 VM bis 6VM entsprechen, und wenigstens einer weiteren Übersetzung, zu der die Antriebswelle 3 und die Abtriebswelle 4 beispielsweise mit unterschiedlicher Drehrichtung rotieren und die einer sogenannten Übersetzung für Rückwärtsfahrt RVM entspricht, stehen die Planetenradsätze P1 bis P3 zumindest teilweise im Bereich von Planetenradsatzwellen, d.h. Hohlrädern, Stegen und/oder Sonnenrädern, miteinander in Wirkverbindung, und sind im Bereich der Planetenradsatzwellen mit den Wellen W1 bis W5 gekoppelt. Darüber hinaus liegen Drehzahlen der Wellen W1 bis W5 während der Darstellung der sechs Übersetzungen 1 VM bis 6VM für Vorwärtsfahrt jeweils in derselben definierten Reihenfolge auf Geraden mit in Abhängigkeit der jeweils eingelegten Übersetzung stehenden Gradienten eines in Fig. 7 näher gezeigten Drehzahlplans.

Ein Stator 9 der elektrischen Maschine 2 ist drehfest mit einem Getriebegehäuse 10 des Getriebes 1 oder mit einem anderen drehfesten Bauelement des Getriebes 1 verbunden, sodass der Stator 9 keine Drehzahl annehmen kann. Ein drehbar gelagerter Rotor 11 der elektrischen Maschine 2 ist über die erste Welle W1 mit einer als Sonnenrad S3 ausgebildeten Planetenradsatzwelle des dritten Planetenradsatzes P3 verbunden. Des Weiteren ist die erste Welle W1 über das als Bremse ausgeführte Schaltelement B mit dem Getriebegehäuse 10 verbindbar und somit drehfest haltbar. Zusätzlich besteht die Möglichkeit, die erste Welle W1 über das Schaltelement R zur Darstellung der Übersetzung RVM für Rückwärtsfahrt mit der Antriebswelle 3 zu koppeln.

Die zweite Welle W2 der Planetenradsätze P1 bis P3 ist sowohl mit einer als Sonnenrad S2 ausgebildeten Planetenradsatzwelle des zweiten Planetenradsatzes P2 und mit einer als Hohlrad HR1 ausgeführten Planetenradsatzwelle des ersten Planetenradsatzes P1 sowie zusätzlich mit einer als Steg ST3 ausgebildeten Planetenradsatzwelle des dritten Planetenradsatzes P3 drehfest verbunden. Zusätzlich ist die zweite Welle W2 über das Schaltelement C mit dem Getriebegehäuse 10 in Wirkverbindung bringbar und drehfest haltbar.

Die dritte Welle W3 ist mit einer als Steg ST1 ausgebildeten Planetenradsatzwelle des ersten Planetenradsatzes P1, einer als Steg ST2 ausgeführten Planetenradsatzwelle des zweiten Planetenradsatzes P2 und mit einer als Hohlrad HR3 ausgeführten Planetenradsatzwelle des dritten Planetenradsatzes P3 verbunden und zusätzlich über das Schaltelement D mit dem Getriebegehäuse 10 koppelbar und somit von diesem drehfest haltbar. Die dritte Welle W3 ist über das Schaltelement E mit der Antriebswelle 3 verbindbar.

Eine als Hohlrad HR2 ausgebildete Planetenradsatzwelle des zweiten Planetenradsatzes P2 ist mit der vierten Welle W4 verbunden, die wiederum mit der Abtriebswelle 4 gekoppelt ist. Darüber hinaus ist die fünfte Welle W5 mit einer als Sonnenrad S1 ausgebildeten Planetenradsatzwelle des ersten Planetenradsatzes P1 verbunden und über das Schaltelement A mit der Antriebswelle 3 verbindbar.

Der dritte Planetenradsatz P3 ist in einer Radsatzebene zwischen einer Radsatzebene RSE der ineinander geschachtelten Planetenradsätze P1 und P2 sowie der elektrischen Maschine 2 angeordnet, womit das Getriebe 1 gemäß Fig. 1 in axialer Richtung durch einen geringen Bauraumbedarf gekennzeichnet ist. Zusätzlich ist das Getriebe 1 mit einer weiteren elektrischen Maschine 8 ausgeführt, die im Bereich eines Rotors 7 mit der Antriebswelle 3 in Wirkverbindung steht.

Die Schaltelemente A, B, E und das optionale Schaltelement R sind vorliegend als formschlüssige Schaltelemente ausgebildet, während die Schaltelemente C und D reibschlüssige Schaltelemente darstellen. Aufgrund der Ausgestaltung des Schaltelementes D als reibschlüssiges Schaltelement besteht beispielsweise die Möglichkeit, über das Schaltelement D ein mit dem Getriebe 1 ausgeführtes Fahrzeug sowohl in Vorwärts- als auch in Rückwärtsfahrtrichtung anzufahren. Über das als Reibschaltelement ausgebildete Schaltelement C bzw. die reibschlüssige Bremse C ist eine Lastschaltung zwischen einem sogenannten ersten elektrischen Gang 1 EM und einem zweiten elektrischen Gang 2EM durchführbar, die über das Getriebe 1 darstellbar sind.

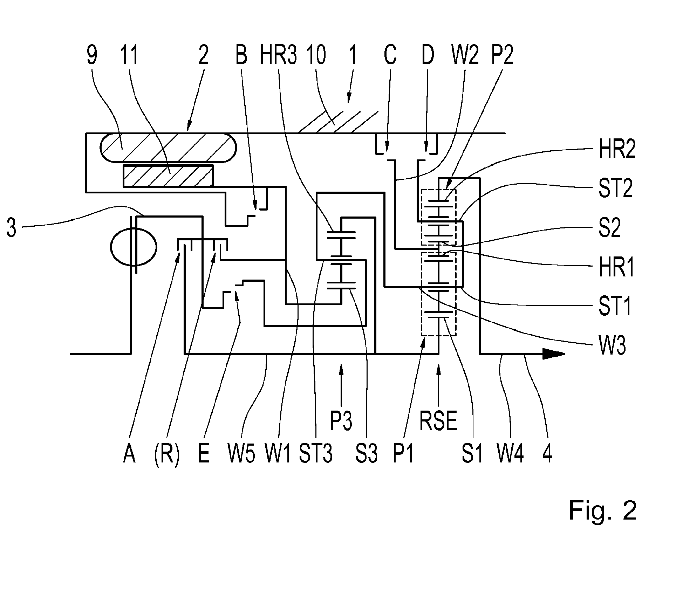

Eine zweite Ausführungsform des Getriebes 1 ist in Fig. 2 dargestellt, mittels der im Wesentlichen derselbe Funktionsumfang wie mit der ersten Ausführungsform des Getriebes 1 gemäß Fig. 1 realisierbar ist. Bei dem Getriebe 1 gemäß Fig. 2 ist der dritte Planetenradsatz P3 abweichend von dem Getriebe 1 gemäß Fig. 1 im Bereich des Hohlrades HR3 mit der fünften Welle W5 und mit dem Sonnenrad S1 des ersten Planetenradsatzes P1 und im Bereich des Steges ST3 mit der dritten Welle W3 und den beiden Stegen ST1 und ST2 verbunden. Zusätzlich ist das Hohlrad HR3 über das Schaltelement A mit der Antriebswelle 3 verbindbar. Darüber hinaus sind die Schaltelemente A und R des Getriebes 1 gemäß Fig. 2 als reibschlüssige Schaltelemente ausgeführt, während die Schaltelemente B, C, D und E als formschlüssige Schaltelemente ausgebildet sind. Aus diesem Grund ist das Schaltelement A als Anfahrelement in Vorwärtsfahrtrichtung und das ebenfalls als Reibkupplung ausgebildete Schaltelement R als Anfahrelement für Rückwärtsfahrt verwendbar.

Ansonsten entspricht der Aufbau des Getriebes 1 gemäß Fig. 2 im Wesentlichen dem Aufbau des Getriebes 1 gemäß Fig. 1, weshalb bezüglich der weiteren Funktionsweise des Getriebes 1 gemäß Fig. 2 auf die vorstehende Beschreibung zu Fig. 1 verwiesen wird.

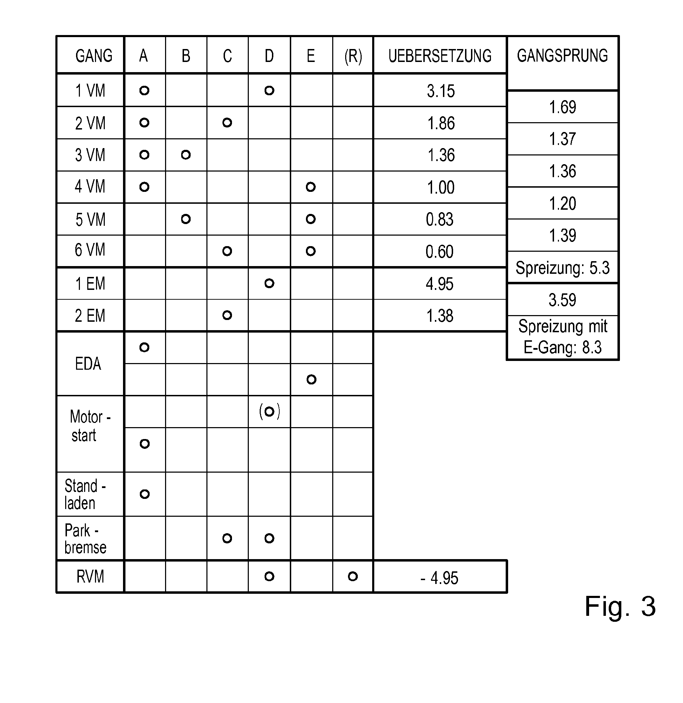

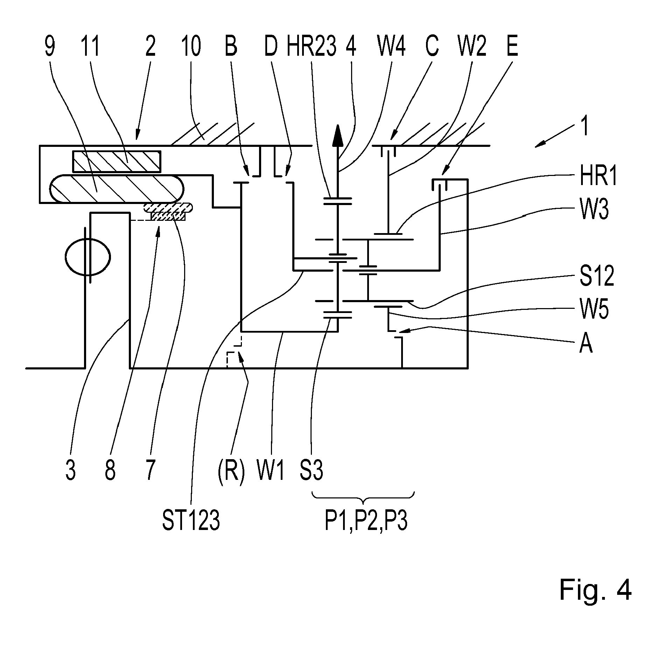

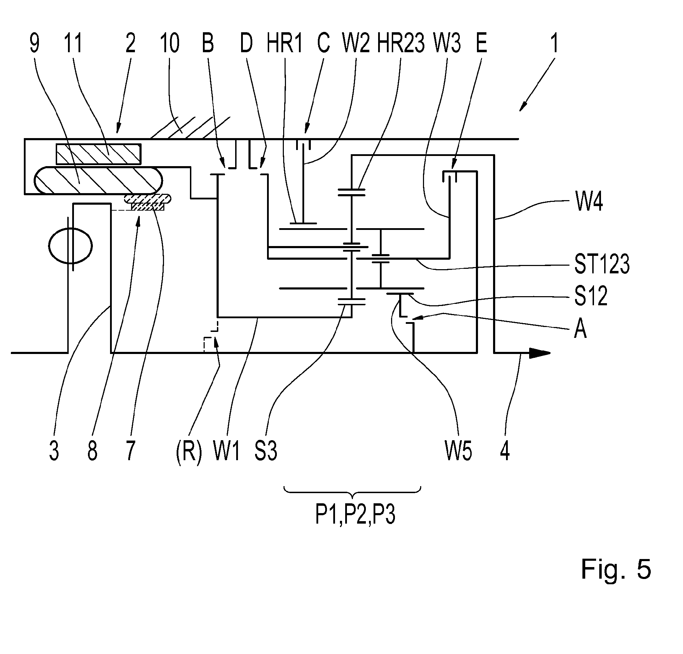

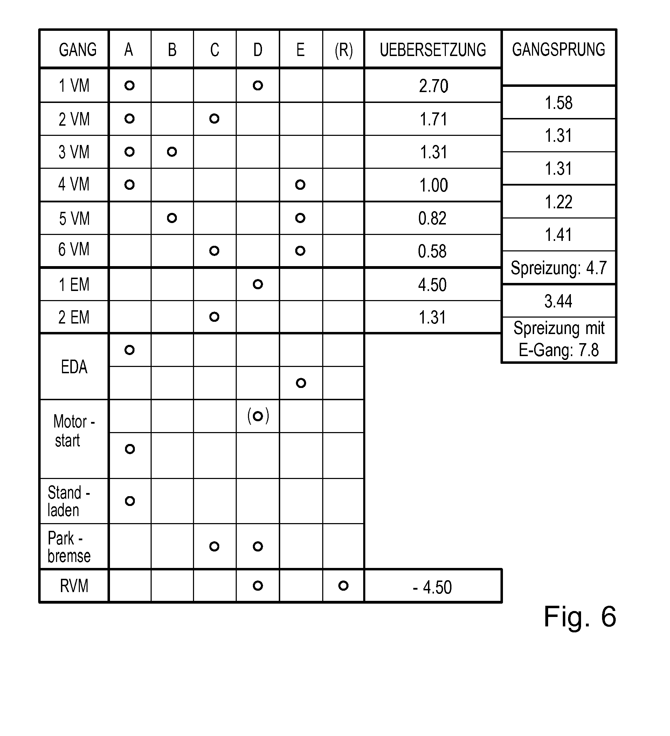

Fig. 3 und Fig. 6 zeigen jeweils ein Schaltschema der Ausführungsformen des Getriebes 1 gemäß Fig. 1 und Fig. 2 bzw. gemäß Fig. 4 und Fig. 5, während in Fig. 7 ein Drehzahlplan für alle in der Zeichnung dargestellten Ausführungsformen des Getriebes 1 wiedergegeben ist. Das in Fig. 6 näher gezeigte Schaltschema des Getriebes 1 gemäß Fig. 4 und Fig. 5 entspricht im Wesentlichen dem in Fig. 3 gezeigten Schaltschema, wobei das Getriebe 1 gemäß Fig. 4 bzw. Fig. 5 jeweils andere Übersetzungswerte sowie Gangsprünge aufweist.

Dabei sind in Fig. 7 in vertikaler Richtung die Drehzahlen der fünf Wellen W1 bis W5 der Planetenradsätze P1 bis P3 im Verhältnis zur Drehzahl der Antriebswelle 3 aufgetragen. Die maximal auftretende Drehzahl n der Antriebswelle 3 ist auf den Wert 1 normiert. Zu einem bestimmten Betriebspunkt gehörende Drehzahlverhältnisse lassen sich jeweils durch eine Gerade verbinden.

In dem in Fig. 3 bzw. Fig. 6 gezeigten Schaltschema sind die jeweils zur Darstellung eines definierten Betriebszustands des Getriebes 1 gemäß Fig. 1, Fig. 2, Fig. 4 oder Fig. 5 in geschlossenem Betriebszustand vorliegenden Schaltelementen A bis E und R durch Kreise gekennzeichnet. Zusätzlich sind den Schaltschemata die jeweiligen Übersetzungswerte der einzelnen Gangstufen 1VM bis 6VM, 1 EM, 2EM sowie RVM und die daraus zu bestimmenden Gangsprünge zum nächsthöheren Gang entnehmbar. Die Übersetzungswerte der einzelnen Gänge ergeben sich aus den beispielhaft vorgegebenen Standgetriebeübersetzungen der Planetenradsätze P1 bis P3. Bei sequentieller Schaltweise können Doppelschaltungen bzw. Gruppenschaltungen vermieden werden, da zwei benachbarte Gangstufen ein Schaltelement gemeinsam benutzen. Die verschiedenen Gänge bzw. Übersetzungen des Getriebes 1 gemäß Fig. 1, Fig. 2, Fig. 4 oder Fig. 5 sind in den verschiedenen Zeilen der Schaltschemata dargestellt.

Die Getriebe 1 gemäß Fig. 1, Fig. 4 und Fig. 5 sind jeweils in vorteilhafter Weise mit der weiteren elektrischen Maschine 8 ausgeführt, die zumindest als Starter-Generator ausgebildet ist. Unabhängig von der Ausführung der Schaltelemente A bis E und R als form- oder reibschlüssige Schaltelemente sind die Schaltelemente B und C, die Schaltelemente D und E sowie die Schaltelemente R und A auf bauraum- und kostengünstige Art und Weise mit sogenannten doppelwirkenden Aktuatoren betätigbar.

Bei allen in der Zeichnung dargestellten Ausführungsformen des Getriebes 1 sind sechs Übersetzungen 1VM bis 6VM für Vorwärtsfahrt und eine Übersetzung RVM für Rückwärtsfahrt zwischen der Antriebswelle 3 und der Abtriebswelle 4 darstellbar. Ein erste Vorwärtsgang 1VM zwischen der Antriebswelle 3 und der Abtriebswelle 4 ergibt sich durch Schließen des Schaltelementes A und des Schaltelementes D. Ein zweiter Vorwärtsgang 2VM ist im Getriebe 1 eingelegt, wenn das Schaltelement A und gleichzeitig das Schaltelement C geschlossen sind. Der dritte Vorwärtsgang 3VM ist dann im Getriebe 1 eingelegt, wenn die Schaltelemente A und B geschlossen sind. Sind im Getriebe 1 das Schaltelemente A und das Schaltelement E gleichzeitig in geschlossenem Betriebszustand überführt, wird im Getriebe 1 der vierte Vorwärtsgang 4VM dargestellt. Liegt eine entsprechende Anforderung zum Einlegen des fünften Vorwärtsgangs 5VM vor, sind das Schaltelement B und das Schaltelement E in einen geschlossenen Betriebszustand zu überführen. Der sechste Vorwärtsgang 6VM ist im Getriebe 1 eingelegt, wenn die Schaltelemente C und E gleichzeitig in geschlossenem Betriebszustand vorliegen.

Soll ein mit dem Getriebe 1 ausgeführtes Fahrzeug in Rückwärtsfahrtrichtung bewegt werden, sind die Schaltelemente D und R gleichzeitig in geschlossenem Betriebszustand zu halten oder in diesen zu überführen.

Ist das Schaltelement D geschlossen ist ein mit dem Getriebe 1 gemäß Fig. 1 oder Fig. 2 ausgeführtes Fahrzeug über die elektrische Maschine 2 in Vorwärtsfahrtrichtung mit einem Übersetzungswert gleich 4,95 in Vorwärtsfahrtrichtung betreibbar. Im Unterschied hierzu ist bei geschlossenem Schaltelement C in der Getriebevorrichtung 1 der zweite elektrische Gang 2EM eingelegt und ein mit der Getriebevorrichtung 1 ausgeführtes Fahrzeug über die elektrische Maschine 2 mit einer Übersetzung gleich 1,38 elektrisch in Vorwärtsfahrtrichtung betreibbar. Bei lediglich geschlossenem Schaltelement A oder E besteht die Möglichkeit, über die Getriebevorrichtung 1 einen sogenannten EDA-Fahrbetrieb darzustellen, über den hauptsächlich verschleißfreie Anfahrvorgänge realisiert werden, wobei die elektrische Maschine 2 und/oder die weitere elektrische Maschine 8 bei geschlossenem Schaltelement E vorzugsweise generatorisch betrieben werden, während die elektrische Maschine 2 und/oder die weitere elektrische Maschine 8 bei geschlossenem Schaltelement A und gleichzeitig aktiviertem EDA-Fahrbetrieb motorisch betrieben werden.

Liegen alle Schaltelemente A bis R in geöffnetem Betriebszustand vor, ist eine mit der Antriebswelle 3 wirkverbundene Antriebsmaschine, die vorzugsweise als Brennkraftmaschine ausgebildet sein kann, über die weitere elektrische Maschine 8 in an sich bekannter Art und Weise während eines motorischen Betriebes der weiteren elektrischen Maschine 8 startbar. Im Unterschied hierzu ist eine solche Antriebsmaschine bei geschlossenem Schaltelement A oder E sowohl über die weitere elektrische Maschine 8 als auch über die elektrische Maschine 2 zuschaltbar bzw. in einen zugeschalteten Betriebszustand überführbar.

Ein elektrischer Energiespeicher ist im Stillstand eines mit der Getriebevorrichtung 1 gemäß Fig. 1, Fig. 2, Fig. 4 oder Fig. 5 ausgeführten Fahrzeuges mit elektrischer Energie beaufschlagbar, wenn das Schaltelement A bei gleichzeitig betätigter Feststellbremse des Fahrzeuges geschlossen ist, wobei dann die weitere elektrische Maschine 8 und/oder die elektrische Maschine 2 in motorischem Betrieb von einer mit der Antriebswelle wirkverbundenen Antriebsmaschine anzutreiben sind.

Um bei Vorliegen einer entsprechenden Anforderung zur Darstellung einer Parkbremse die Abtriebswelle 4 im erforderlichen Umfang drehfest darstellen zu können, wird durch Schließen der Schaltelemente C und D der Radsatz und damit auch die Abtriebswelle 4 blockiert und festgesetzt. Dies ist besonders dann mit geringem Aufwand realisierbar, wenn die Schaltelemente C und D als Klauenbremsen ausgeführt sind.

Über das als reibschlüssige Kupplung ausgeführte Schaltelement A ist die mit der Antriebswelle 3 wirkverbundene Antriebsmaschine anschleppbar. Ist in der Getriebevorrichtung 1 der zweite elektrische Fahrgang 2EM durch das dann in geschlossenem Betriebszustand vorliegende Schaltelement C eingelegt, ist ein Schleppstart einer solchen Antriebsmaschine auch über die dann als Reibschaltelement auszuführende Kupplung E realisierbar.

Ist das Schaltelement C als reibschlüssiges Schaltelement ausgeführt, ermöglicht dieses bzw. unterstützt dieses Lastschaltungen zwischen der vierten Übersetzung 4VM in Richtung der fünften Übersetzung 5VM oder in Richtung der sechsten Übersetzung 6VM oder eine Lastschaltung zwischen der fünften Übersetzung 5VM und der Übersetzung 6VM, wobei die vierte Übersetzung 4VM für Vorwärtsfahrtrichtung vorliegend einen Direktgang des Getriebes 1 darstellt.

Die in Fig. 4 und Fig. 5 gezeigten weiteren Ausführungsformen des Getriebes 1 und unterscheiden sich von den in Fig. 1 und Fig. 2 dargestellten Ausführungsformen der Getriebevorrichtung 1 im Wesentlichen im Bereich der drei Planetenradsätze P1 bis P3, die den nachfolgend näher beschriebenen Aufbau aufweisen und ebenfalls mit fünf Wellen W1 bis W5 ausgebildet sind. Die drei Planetenradsätze P1 bis P3 sind dabei ineinander integriert. Erster und dritter Planetenradsatz P1, P3 wirken als Minus-Radsatz, während der zweite Planetenradsatz P2 als Plus-Radsatz wirkt.

Die erste Welle W1 des Getriebes 1 gemäß Fig. 4 und gemäß Fig. 5 ist in gleichem Umfang wie bei dem Getriebe 1 gemäß Fig. 1 und Fig. 2 mit dem Sonnenrad S3 des dritten Planetenradsatzes P3 und zusätzlich mit dem Rotor 11 der elektrischen Maschine 2 drehfest verbunden. Zusätzlich ist die erste Welle W1 über das Schaltelement B mit dem Getriebegehäuse 10 verbindbar und somit drehfest haltbar. Die Welle W2 ist über das Schaltelement C drehfest haltbar und mit dem Hohlrad HR1 des ersten Planetenradsatzes P1 verbunden. Die dritte Welle W3 des Getriebes 1 gemäß Fig. 4 und Fig. 5 ist mit einem Steg ST123 verbunden, welcher als gemeinsamer Steg des ersten, zweiten und dritten Planetenradsatzes P1, P2, P3 ausgebildet ist. Die dritte Welle W3 ist über das als reibschlüssiges Schaltelement ausgeführte Schaltelement E mit der Antriebswelle 3 koppelbar. Zusätzlich ist die dritte Welle W3 über das Schaltelement D mit dem Getriebegehäuse 10 verbindbar und somit drehfest haltbar. Die vierte Welle W4 ist sowohl mit der Abtriebswelle 4 als auch mit einem Hohlrad HR23 verbunden, wobei das Hohlrad HR23 als gemeinsames Hohlrad des zweiten und dritten Planetenradsatzes P2, P3 ausgebildet ist. Die fünfte Welle W5 ist mit einem Sonnenrad S12 verbunden, welches als gemeinsames Sonnenrad des ersten und zweiten Planetenradsatzes P1, P2 ausgebildet ist. Die fünfte Welle W5 ist über das als formschlüssiges Schaltelement ausgeführte Schaltelement A mit der Antriebswelle 3 verbindbar.

In Abhängigkeit des jeweils vorliegenden Anwendungsfalles besteht wiederum die Möglichkeit, das Getriebe 1 gemäß Fig. 4 und Fig. 5 mit der weiteren elektrischen Maschine 8 auszuführen, um die zu Fig. 1 und Fig. 2 sowie anhand der Schaltschemata gemäß Fig. 3 und Fig. 6 näher beschriebenen Funktionalitäten des Getriebes 1 darstellen zu können.

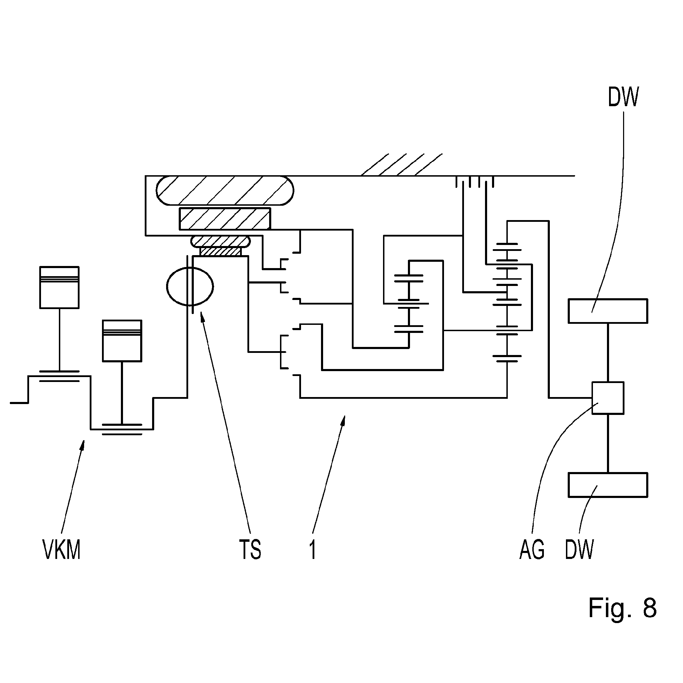

Figur 8 zeigt einen Antriebsstrang eines Hybridfahrzeuges mit einem Getriebe 1 gemäß dem ersten Ausführungsbeispiel. Dies ist lediglich beispielhaft anzusehen. Der Antriebsstrang könnte mit jedem der angeführten Ausführungsbeispiele des Getriebes 1 ausgeführt sein. Der Antriebsstrang weist eine Verbrennungskraftmaschine VKM auf, die über einen Torsionsschwingungsdämpfer TS mit der Antriebswelle 3 des Getriebes G verbunden ist. Vom Achsgetriebe AG ausgehend wird die Leistung, die an der Abtriebswelle 4 anliegt, auf Räder DW des Kraftfahrzeugs verteilt.

### Bezugszeichen

- 1: Getriebe
- 2: Elektrische Maschine
- 3: Antriebswelle
- 4: Abtriebswelle
- 7: Rotor
- 8: weitere elektrische Maschine
- 9: Stator
- 10: Getriebegehäuse
- 11: Rotor
- A-E, R: Schaltelement
- P1-P3: Planetenradsatz
- n: Drehzahl
- W1-W5: Welle
- HR1-HR3, HR23: Hohlrad
- S1-S3, S12: Sonnenrad
- ST1-ST3, ST123: Steg
- 1VM-6VM: Vorwärtsgang
- RVM: Rückwärtsgang
- 1EM, 2EM: elektrischer Gang
- RSE: Radsatzebene
- VKM: Verbrennungskraftmaschine
- DW: Räder
- AG: Achsgetriebe
- TS: Torsionsschwingungsdämpfer

## Patentansprüche

1. Getriebe (1) für ein Kraftfahrzeug, wobei das Getriebe (1) eine Antriebswelle (3), eine Abtriebswelle (4), eine elektrische Maschine (2) mit einem drehfesten Stator (9) und einem drehbaren Rotor (11), einen ersten, zweiten und dritten Planetenradsatz (P1, P2, P3), sowie ein erstes, zweites, drittes, viertes und fünftes Schaltelement (A, B, C, D, E) aufweist,
- wobei die drei Planetenradsätze (P1, P2, P3) zusammen fünf in der Reihenfolge ihrer Drehzahlordnung als erste, zweite, dritte, vierte und fünfte Welle bezeichnete Wellen (W1, W2, W3, W4, W5) aufweisen,
- wobei die Antriebswelle (3) über das erste Schaltelement (A) mit der fünften Welle (W5) und über das fünfte Schaltelement (E) mit der dritten Welle (W3) verbindbar ist,
- wobei die Abtriebswelle (4) mit der vierten Welle (W4) ständig verbunden ist,
- wobei durch Schließen des zweiten Schaltelements (B) die erste Welle (W1) drehfest festsetzbar ist,
- wobei durch Schließen des dritten Schaltelements (C) die zweite Welle (W2) drehfest festsetzbar ist,
- wobei durch Schließen des vierten Schaltelements (D) die dritte Welle (W3) drehfest festsetzbar ist, und
- wobei der Rotor (11) mit der ersten Welle (W1) ständig verbunden ist.

2. Getriebe (1) nach Anspruch 1, **dadurch gekennzeichnet, dass** durch selektives paarweises Schließen der fünf Schaltelemente (A bis E) sechs Vorwärtsgänge (1VM bis 6VM) zwischen der Antriebswelle (3) und der Abtriebswelle (4) darstellbar sind, wobei sich
- der erste Vorwärtsgang (1VM) durch Schließen des ersten Schaltelements (A) und des vierten Schaltelements (D),
- der zweite Vorwärtsgang (2VM) durch Schließen des ersten Schaltelements (A) und des dritten Schaltelements (C),
- der dritte Vorwärtsgang (3VM) durch Schließen des ersten Schaltelements (A) und des zweiten Schaltelements (B),
- der vierte Vorwärtsgang (4VM) durch Schließen des ersten Schaltelements (A) und des fünften Schaltelements (E),
- der fünfte Vorwärtsgang (5VM) durch Schließen des zweiten Schaltelements (B) und des fünften Schaltelements (E), und
- der sechste Vorwärtsgang (6VM) sich durch Schließen des dritten Schaltelements (C) und des fünften Schaltelements (E) ergibt.

3. Getriebe (1) nach Anspruch 1, **dadurch gekennzeichnet, dass** die Antriebswelle (3) über ein sechstes Schaltelement (R) mit der ersten Welle (W1) oder mit der zweiten Welle (W2) verbindbar ist.

4. Getriebe (1) nach Anspruch 3, **dadurch gekennzeichnet, dass** sich ein Rückwärtsgang (RVM) zwischen der Antriebswelle (3) und der Abtriebswelle (4) durch Schließen des vierten Schaltelements (D) und des sechsten Schaltelements (R) ergibt.

5. Getriebe (1) nach einem der vorangehenden Ansprüche, **dadurch gekennzeichnet, dass** der erste Planetenradsatz (P1) radial innerhalb des zweiten Planetenradsatzes (P2) in einer gemeinsamen Radsatzebene (RSE) angeordnet ist.

6. Getriebe (1) nach einem der vorangehenden Ansprüche, **dadurch gekennzeichnet, dass**
- die erste Welle (W1) mit einem Sonnenrad (S3) des dritten Planetenradsatzes (P3) verbunden ist, wobei
- die zweite Welle (W2) mit einem Sonnenrad (S2) des zweiten Planetenradsatzes (P2) und mit einem Hohlrad (HR1) des ersten Planetenradsatzes (P1) verbunden ist, wobei
- die dritte Welle (W3) mit einem Steg (ST1) des ersten Planetenradsatzes (P1) und mit einem Steg (ST2) des zweiten Planetenradsatzes (P2) verbunden ist, wobei
- die vierte Welle (W4) mit einem Hohlrad (HR2) des zweiten Planetenradsatzes (P2) verbunden ist, und wobei
- die fünfte Welle (W5) mit einem Sonnenrad (S1) des ersten Planetenradsatzes (P1) verbunden ist.

7. Getriebe (1) nach Anspruch 6, **dadurch gekennzeichnet, dass**
- die zweite Welle (W2) mit einem Steg (ST3) des dritten Planetenradsatzes (P3) verbunden ist, wobei
- die dritte Welle (W3) und mit einem Hohlrad (HR3) des dritten Planetenradsatzes (P3) verbunden ist.

8. Getriebe (1) nach Anspruch 6, **dadurch gekennzeichnet, dass**
- die dritte Welle (W3) mit einem Steg (ST3) des dritten Planetenradsatzes (P3) verbunden ist, wobei
- die fünfte Welle (W5) und mit einem Hohlrad (HR3) des dritten Planetenradsatzes (P3) verbunden ist.

9. Getriebe (G) nach einem der Ansprüche 1 bis 4, **dadurch gekennzeichnet, dass**
- die erste Welle (W1) mit einem Sonnenrad (S3) des dritten Planetenradsatzes (P3) verbunden ist, wobei
- die zweite Welle (W2) mit einem Hohlrad (HR1) des ersten Planetenradsatzes (P1) verbunden ist, wobei
- die dritte Welle (W3) mit einem Steg (ST123) verbunden ist, welcher als gemeinsamer Steg des ersten, zweiten und dritten Planetenradsatzes (P1, P2, P3) ausgebildet ist, wobei
- die vierte Welle (W4) mit einem Hohlrad (HR23) verbunden ist, welches als gemeinsames Hohlrad des zweiten und dritten Planetenradsatzes (P2, P3) ausgebildet ist, und wobei
- die fünfte Welle (W5) mit einem Sonnenrad (S12) verbunden ist, welches als gemeinsames Sonnenrad des ersten und zweiten Planetenradsatzes (P1, P2) ausgebildet ist.

10. Getriebe (1) nach einem der vorangehenden Ansprüche, **dadurch gekennzeichnet, dass** das vierte Schaltelement (D) als kraftschlüssiges Schaltelement mit variabler Drehmomentübertragungsfähigkeit ausgebildet ist, wobei das erste und zweite Schaltelement (A, B) als formschlüssige Schaltelemente ausgebildet sind.

11. Getriebe (1) nach Anspruch 10, **dadurch gekennzeichnet, dass** das dritte Schaltelement (C) als kraftschlüssiges Schaltelement mit variabler Drehmomentübertragungsfähigkeit ausgebildet ist.

12. Getriebe (1) nach einem der Ansprüche 1 bis 9, **dadurch gekennzeichnet, dass** das erste Schaltelement (A) als kraftschlüssiges Schaltelement mit variabler Drehmomentübertragungsfähigkeit ausgebildet sind, wobei das zweite und vierte Schaltelement (B, D) als formschlüssige Schaltelemente ausgebildet sind.

13. Getriebe (1) nach einem der Ansprüche 1 bis 9, **dadurch gekennzeichnet, dass** das zweite und dritte Schaltelement (B, C), und/oder das vierte und fünfte Schaltelement (D, E) und/oder das erste und sechste Schaltelement (A, R) als formschlüssige Schaltelemente ausgebildet sind, welche durch je einen doppeltwirkenden Betätigungsmechanismus schaltbar sind.

14. Getriebe (1) nach einem der vorangehenden Ansprüche, **dadurch gekennzeichnet, dass** der Rotor (7) einer zweiten elektrischen Maschine (8) mit der Antriebswelle (3) verbunden ist.

15. Antriebsstrang für ein Hybridfahrzeug, wobei der Antriebsstrang eine Verbrennungskraftmaschine (VKM), ein Getriebe (1) nach einem der vorangehenden Ansprüche sowie ein mit Rädern (DW) des Hybridfahrzeugs verbundenes Achsgetriebe (AG) aufweist, wobei die Antriebswelle (3) des Getriebes (1) ständig oder über eine Trennkupplung mit der Verbrennungskraftmaschine (VKM) drehelastisch verbunden oder verbindbar ist und die Abtriebswelle (4) des Getriebes (1) mit dem Achsgetriebe (AG) antriebswirkverbunden ist.
